# EUROPEAN PATENT APPLICATION

(11) **EP 4 653 231 A1**
(43) Date of publication of application: **26.11.2025**
(21) Application number: 24177078.3
(22) Date of filing: 21.05.2024
(51) Int. Cl.: B60L 1/00, B60W 20/11, B60W 50/00, H01M 8/04007, H01M 8/04111, H01M 8/04228, H01M 8/04303, H01M 8/0432, H01M 8/04701, H01M 8/04955, B60L 3/12, B60L 7/08, B60L 7/18

(54) **A SYSTEM, A METHOD OF CONTROLLING A SYSTEM, AND A VEHICLE COMPRISING A SYSTEM**

(71) Applicant: VOLVO TRUCK CORPORATION, 405 08 Göteborg (SE)
(72) Inventor: LUNDGREN, Staffan, 438 53 HINDÅS (SE)
(74) Representative: Kransell & Wennborg KB

(57) **Abstract**

The present disclosure relates to a system (10) for a vehicle (1), the system (10) comprising a fuel cell system (12) having at least one fuel cell (40, 40a) with an anode side (35) and a cathode side (42), an electrically powered compressor (50) for compressing air and configured to be in fluid communication with the cathode side (42) via a first flow path (44), a flow control valve assembly (20) disposed downstream of the electrically powered compressor (50), the flow control valve assembly (20) being configured to regulate flow of compressed air to the cathode side (42) and to a second flow path (48) connectable to an exhaust duct (49), the second flow path (48) being separate from the first flow path (44), wherein the system (10) further comprises a controller (90) having processing circuitry (92) configured to: determine a change in the operation of the at least one fuel cell (40,40a), wherein the change amounts to a ramping down of the at least one fuel cell (40,40a); determine a need for dissipating energy from the system (10) based on data indicative of a need for dissipating energy due to a braking demand of the vehicle (1); monitor a hydrogen pressure level at an inlet (36) of the anode side (35); monitor a pressure level of the compressed air in the first flow path (44); and control the operation of the electrically powered compressor (50) and the flow control valve assembly (20) based on the determined change in the operation of the at least one fuel cell (40,40a) and the need for dissipating energy, wherein the control valve assembly (20) is controlled to distribute the flow of compressed air between the first flow path (44) and the second flow path (48).

## Description

### TECHNICAL FIELD

The disclosure generally relates to systems for vehicles comprising a fuel cell system. In particular aspects, the disclosure relates to a system, a method for controlling the system and a vehicle comprising the system. The disclosure can be applied to heavy-duty vehicles, such as trucks, buses, and construction equipment, among other vehicle types. Although the disclosure may be described with respect to a particular vehicle, the disclosure is not restricted to any particular vehicle. The vehicle may be a truck using any one of a battery system and a fuel cell system for generating electric power to an electric traction machine. However, the disclosure may also be applicable for other types of vehicles using a fuel cell system for generating electric power, such as a hybrid vehicle comprising an electric machine as well as an internal combustion engine for propulsion.

### BACKGROUND

The propulsion systems of vehicles are continuously developed to meet the demands from the market. A particular technical area of vehicle propulsions systems relates to the emission of environmentally harmful exhaust gases. Therefore, other more environmentally friendly alternatives compared to conventional internal combustion engines are evaluated and implemented in vehicles. One example of such alternatives is the use of one or more electric machines for propelling the vehicle, where electric power to the one or more electric machines is generated by at least one fuel cell system. Fuel cell systems convert chemical energy from fuels into electrical energy through an electrochemical reaction, typically involving hydrogen and oxygen.

One of the more important features of electric vehicles relates to their capability to capture kinetic energy from braking and convert it electrically to be stored in the battery system and used for providing propulsive power or for the basic energy needs of supplementary electrical systems.

In comparison to a vehicle propelled solely by an internal combustion engine (ICE), a vehicle powered by a fuel cell system and one or more electric machine may occasionally face challenges with obtaining adequate auxiliary braking. For a vehicle comprising an ICE, the auxiliary braking can be provided by means of a retarder or by so called engine braking. However, for an electric vehicle, the auxiliary braking functionality may sometimes be a dimensioning factor for the components making up the powertrain system of the vehicle, in particular for the cooling system of the powertrain system. This is at least partly due to the cooling capacity of the cooling system. By way of example, a heavy-duty electric vehicle may often be subject to braking/retardation for long periods, while driving downhill along a route. In electric vehicles, this braking/retardation may generally be carried out by braking using an electric machine which generates power and subsequently charges the batteries of the vehicle. If the braking/retardation periods are long-lasting and extensive, the batteries will eventually become fully charged and can no longer provide the required brake power. In such cases, the brake system may activate or operate a brake resistor which is configured to handle the excessive generated heat once the batteries are fully charged. The resistor is heated up using the power produced from the electric machines. For thermal management reasons, the brake resistors need to be cooled during operation of the vehicle.

As a consequence, any auxiliary braking of the vehicle may generally cause the cooling system of the vehicle to handle high levels of excessive energy.

It would be desirable to provide an improved energy management for managing excessive energy generated during operation of an electric vehicle comprising at least a fuel cell system for powering one or more electric machines.

### SUMMARY

According to a first aspect of the disclosure, there is provided a system for a vehicle, the system comprising a fuel cell system having at least one fuel cell with an anode side and a cathode side, an electrically powered compressor for compressing air and further configured to be in fluid communication with an air inlet of the cathode side via a first flow path, a flow control valve assembly disposed downstream of the electrically powered compressor, the flow control valve assembly being configured to regulate flow of compressed air to the cathode side and to a second flow path connectable to an exhaust duct, the second flow path being separate from the first flow path, wherein the system further comprises a controller having processing circuitry configured to determine a change in the operation of the at least one fuel cell, wherein the change amounts to a ramping down of the at least one fuel cell; determine a need for dissipating energy from the system based on data indicative of a need for dissipating energy due to a braking demand of the vehicle; monitor a hydrogen pressure level at an inlet of the anode side; monitor a pressure level of the compressed air in the first flow path; and control the operation of the electrically powered compressor and the flow control valve assembly based on the determined change in the operation of the at least one fuel cell and the need for dissipating energy, wherein the control valve assembly is controlled to distribute the flow of compressed air between the first flow path and the second flow path so as to maintain a pressure balance between the monitored hydrogen pressure level and the monitored pressure level of the compressed air.

As such, the processing circuity is configured to maintain the pressure balance between the hydrogen pressure level at the inlet of the anode side and the air pressure level at the inlet of the cathode side.

The first aspect of the disclosure may seek to improve the management of the dynamic balance between the operational demands of the fuel cell system and the braking requirements of the vehicle. By integrating the operation of the flow control valve assembly with real-time pressure level data and the need for dissipating energy from the system, it becomes possible to increase the likelihood that the fuel cell system operates within desired pressure differential ranges under varying condition. Hereby, it becomes possible to adapt the operation of the system to varying load demands and preserve the integrity and efficiency of the fuel cell system. By way of example, the compressor can be controlled to operate with a high speed for dissipating excessive energy also in situations where the fuel cell system is ramping down to an idle power supply mode. As such, the proposed system may seek to provide an efficient and versatile way of managing excessive energy generated during operation of the vehicle by controlling the compressor of the fuel cell system in response to the determined need for managing generated excessive energy and the monitored pressure levels. Managing excessive electrical energy derived from regenerative braking may be particularly useful in situations where conventional energy storage or dissipation methods are not viable due to battery capacity constraints or other limitations.

A technical benefit of the proposed system includes the improved management of the dynamic balance between the operational demands of the fuel cell system and the braking requirements of the vehicle. For example, the flow control valve assembly is typically controlled to direct a majority of the compressed air to the second flow path (connected to an exhaust conduit) during high power operation of the compressor, thereby maintaining the pressure differential across the fuel cell(s) of the fuel cell system while consuming excess electrical energy.

A maintained pressure balance between the hydrogen pressure level at the anode side and the pressure level at the cathode side allows for maintaining the fuel cell efficiency and longevity by preventing undue stress on the fuel cell membranes and ensuring consistent energy output.

Determining energy dissipation needs based on braking demand may allow for more effective regenerative braking, capturing kinetic energy that would otherwise be lost and using the energy to supplement the energy needs of the vehicle.

The need for dissipating energy can be determined in several different manners, as described herein. The proposed system is particularly useful when there is a need for transferring excessive energy from a vehicle braking event. In this context, it has been realized that fuel cell electric vehicles typically need additional devices (such as retarders) or sufficiently dimensioned batteries to absorb braking energy generated while driving downhill. Retarders may often result in wastage of energy whereas larger batteries may result in higher vehicle weight and oversizing of the energy storage system to meet just one requirement.

In particular, by controlling the electrically powered compressor of the fuel cell system in response to the determined change in the operation of the at least one fuel cell and the need for dissipating energy, it becomes possible to improve the capabilities of the vehicle to absorb some amount of energy (kinetic energy is converted to electrical energy) and power during the braking demand, such as during a braking event or in the preparations for an upcoming braking event. Such excessive energy may thus be used to power the compressor for pressurizing the air flowing at the cathode side. That is, excessive electrical energy is used to power the compressor, thereby increasing the overall efficiency of the energy management of the vehicle.

The term "braking demand" typically refers to an energy dissipation situation where there is a need for managing excessive energy generated due to a predicted or prevailing braking operation. Hence, the term "braking demand" may refer to any one of a current braking demand and a predicted braking demand.

The proposed system may also allow for recuperating energy more effectively without oversizing the battery/energy storage system of the vehicle. Excessive energy may typically be generated by operating an electric traction machine of the vehicle in a generator mode for generating electrical energy during the regenerative braking event of the vehicle. A conventional electric machine may typically be operable both in a traction mode and in a generator mode.

Optionally, in some examples, including in at least one preferred example, the electrically powered compressor is arranged to operate from recuperation of brake energy from the braking event. As such, the electrically powered compressor is arranged to absorb energy generated from the braking event.

The electrically powered compressor may be provided in several different configurations. Typically, the electrically powered compressor may be an electrically operated compressor. By way of example, the electrically powered compressor is drivingly connected to an electric motor. The compressor is thus powered by the electric motor. The electric motor is operable from any source of electrical energy, including recuperated energy from braking, i.e., produced power from the regenerative braking, electrical energy from a battery system and electrical energy from a fuel cell system and/or from one or more fuel cells. In addition, or alternatively, the electrically powered compressor may be configured to operate in any type of driving situation, even when the vehicle is not braking.

Optionally, in some examples, including in at least one preferred example, the processing circuitry may be configured to compare the monitored pressure level of the compressed air and the monitored hydrogen pressure level so as to maintain a pressure balance between the monitored hydrogen pressure level and the monitored pressure level of the compressed air. A technical benefit may include more precisely determining that the balance between the compressed air and hydrogen gas pressures is maintained during operation of the system, which may be particularly beneficial for the efficient operation of the fuel cell system.

Optionally, in some examples, including in at least one preferred example, the pressure level of the compressed air in the first flow path may be monitored by a first pressure sensor. A technical benefit may include even more precise monitoring and control of air supply to the fuel cell(s), enhancing the responsiveness of the system to changes in operational demands. Such configuration may also enable the system to adjust the air flow efficiently, maintaining fuel cell performance under varying load conditions.

Optionally, in some examples, including in at least one preferred example, the hydrogen pressure level at an inlet of the anode side may be monitored by a second pressure sensor. A technical benefit may include even more accurate monitoring of hydrogen pressure, which may be beneficial for preventing, or at least reducing fuel starvation or excess in the fuel cell(s). Such configuration may also contribute to that the fuel cell(s) operating within a desired efficiency range, thereby maximizing energy output and minimizing wear on the fuel cell components.

Optionally, in some examples, including in at least one preferred example, the processing circuitry may be configured to determine the need for dissipating energy due to the braking demand of the vehicle by determining an amount of possible energy from a regenerative braking event of the vehicle. A technical benefit may include enhanced energy recovery and utilization, allowing the system to harness energy more effectively during braking. Such configuration may not only improve the overall energy efficiency of the system and the vehicle but may also contribute to longer fuel cell system life, longer battery life and reduced operational costs.

The need for energy dissipation may be determined by calculating excessive electrical energy, which can e.g., be derivable by determining the sum between predicted electrical energy consumption and predicted energy production over a given period of time. The need for dissipating energy due to the braking demand of the vehicle can be determined or estimated in several different manners.

Typically, although strictly not required, the provision of determining an amount of possible excessive energy from the braking event of the vehicle is determined during a regenerative braking event. However, it may also be possible to predict possible excessive energy from an up-coming braking event of the vehicle in advance based on one or more operational parameters, as mentioned herein. In this manner, the system allows for estimating the need for dissipating energy in view of how much energy that can or will be regenerated.

Optionally, in some examples, including in at least one preferred example, the processing circuitry may be configured to operate the compressor at a higher power level during regenerative braking to consume excess electrical energy. A technical benefit may include a more balanced use of surplus energy generated during regenerative braking events to increase air compression, which can be routed to the second flow path or used immediately by the fuel cell system depending on the determined change in the operation of the at least one fuel cell. Such operation may thus contribute to improved system efficiency by ensuring that the energy recovered during braking is not wasted.

Optionally, in some examples, including in at least one preferred example, the processing circuitry may be configured to operate the compressor at the higher power level based on power from any one of an electric machine operating in a generator mode and a battery system. A technical benefit may include providing more flexible and efficient energy management, enabling the system to draw power from the most suitable source depending on the current state and energy reserves of the vehicle.

Optionally, in some examples, including in at least one preferred example, the flow control valve assembly may comprise a two-way valve configured to have one inlet for receiving compressed air and two outlets for directing the flow of compressed air to the first flow path and the second flow path, respectively. A technical benefit may include enhanced control over the distribution of compressed air.

Optionally, in some examples, including in at least one preferred example, the two-way valve may be selected from a group consisting of a linear valve, a butterfly valve, and a bleed valve, each configured to have one inlet and two outlets for directing the flow of compressed air.

Optionally, in some examples, including in at least one preferred example, the system further comprises an electric powertrain system configured to provide power to the vehicle and further controllable as an electrical energy dissipating system for powering the electrically powered compressor in response to the determined need for dissipating energy.

Optionally, in some examples, including in at least one preferred example, the electric powertrain system may comprise traction electric machine. A technical benefit may include the provision of an efficient and responsive system to convert electrical energy into mechanical power for the vehicle, and vice versa.

Optionally, in some examples, including in at least one preferred example, the system may further comprise a cooler configured to regulate a temperature of the compressed air.

Optionally, in some examples, including in at least one preferred example, the system may further comprise a humidifier arranged at the cathode side of the fuel cell system.

Optionally, in some examples, including in at least one preferred example, the controller is configured to determine the need for dissipating energy using topography data of the route. A technical benefit may include providing improved predictive energy management. Utilizing route topography data allows the system to proactively adjust the energy management in the system based on upcoming conditions, such as inclines or declines. Such configuration may further improve energy usage and recovery for enhanced efficiency and performance throughout the journey.

According to a second aspect of the disclosure, there is provided a vehicle comprising the system according to the first aspect.

According to a third aspect of the disclosure, there is provided a computer-implemented method for controlling a system of a vehicle, the system comprising a fuel cell system having at least one fuel cell with an anode side and a cathode side, an electrically powered compressor for compressing air and configured to be in fluid communication with an air inlet of the cathode side via a first flow path, a flow control valve assembly disposed downstream of the electrically powered compressor, the flow control valve assembly being configured to regulate flow of compressed air to the cathode side and to a second flow path connectable to an exhaust duct, the second flow path being separate from the first flow path. The method comprises determining, by processing circuitry of a controller, a change in the operation of the at least one fuel cell, wherein the change amounts to a ramping down of the at least one fuel cell; determining, by processing circuitry of the controller, a need for dissipating energy from the system based on data indicative of a need for dissipating energy due to a braking demand of the vehicle; monitoring, by processing circuitry of the controller, a hydrogen pressure level at an inlet of the anode side; monitoring, by processing circuitry of the controller, a pressure level of the compressed air in the first flow path and controlling, by processing circuitry of the controller, the operation of the electrically powered compressor and the flow control valve assembly based on the determined change in the operation of the at least one fuel cell and the need for dissipating energy, wherein the flow control valve assembly is controlled to distribute the flow of compressed air between the first flow path and the second flow path so as to maintain a pressure balance between the monitored hydrogen pressure level and the monitored pressure level of the compressed air.

The third aspect of the disclosure may seek to improve the management of the dynamic balance between the operational demands of the fuel cell system and the braking requirements of the vehicle. By integrating the operation of the flow control valve assembly with real-time pressure level data and the need for dissipating energy from the system, it becomes possible to increase the likelihood that fuel cell system operates within desired pressure differential ranges. Hereby, it becomes possible to adapt the operation of the system to varying load demands and preserve the integrity and efficiency of the fuel cell system. A technical benefit may include providing an improved management of the dynamic balance between the operational demands of the fuel cell system and the braking requirements of the vehicle.

According to a fourth aspect of the disclosure, there is provided a computer program product comprising program code for performing, when executed by the processing circuitry, the method of the third aspect.

According to a fifth aspect of the disclosure, there is provided a non-transitory computer-readable storage medium comprising instructions, which when executed by the processing circuitry, cause the processing circuitry to perform the method of the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits and/or technical improvements.

### BRIEF DESCRIPTION OF THE DRAWINGS

Examples are described in more detail below with reference to the appended drawings.
**FIG. 1** illustrates an exemplary view of a vehicle, comprising a system according to an example.
**FIG. 2** illustrates an exemplary view of a system according to an example.
**FIG. 3** is a flow chart of an exemplary method to control a system of a vehicle according to an example.
**FIG. 4** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present disclosure is at least partly based on the realization that traditional fuel cell systems may face challenges in maintaining desirable operating conditions, especially under varying load demands and during vehicle braking situations. One challenge related to fuel cell systems is the management of the pressure differential across the fuel cell system to prevent damage to the membranes and ensure efficient operation. Additionally, regenerative braking of fuel cell electric vehicles may typically introduce excess energy that needs to be effectively managed to avoid system inefficiencies or damage. Regarding the pressure differential across the fuel cell system, the typical pressure curve between the compressor and the turbine in a fuel cell system should not decrease too rapidly, which means that the pressure difference between the hydrogen inflow and oxygen inflow should be maintained relatively constant. The reason behind this balance in pressure levels is that if the pressure drop is too high, there may be a risk that the gradient across the membranes in the bipolar membranes of the fuel cell system becomes too large, which can cause long-term damage. Therefore, it is desirable to avoid overpressure in the compressor of the fuel cell system. As such, it would be desirable to control how quickly the compressor ramps down during braking of the vehicle. That is, it would be desirable to control how quickly the electric motor connected to the compressor ramps down the oxygen flow (thereby the pressure) to the fuel cell, while ensuring that the system maintains the same pressure as the hydrogen flow to the fuel cell. In this context, it should be noted that the pressure difference across the fuel cell(s) of the fuel cell system should not become overly large.

For these and other reasons, there is still a need for improving the management of a fuel cell system under varying loads and during regenerative braking periods in vehicles, such as heavy-duty vehicles.

As such, the proposed systems and methods may seek to improve the management of the dynamic balance between the operational demands of the fuel cell system and the braking requirements of the vehicle. By integrating the operation of the flow control valve assembly with real-time pressure level data and the need for dissipating energy from the system, it becomes possible to increase the likelihood that the fuel cell system operates within desired pressure differential ranges under varying conditions. Hereby, it becomes possible to adapt the operation of the system to varying load demands and preserve the integrity and efficiency of the fuel cell system. By way of example, the compressor can be controlled to operate at a high speed for dissipating excessive energy even in situations where the fuel cell system is ramping down to an idle power supply mode. As such, the proposed system may seek to provide an efficient and versatile way of managing excessive energy generated during the operation of the vehicle by controlling the compressor of the fuel cell system in response to the determined need for managing generated excessive energy and the monitored pressure levels. Managing excessive electrical energy derived from regenerative braking may be particularly useful in situations where conventional energy storage or dissipation methods are not viable due to battery capacity constraints or other limitations.

A technical benefit of the proposed system includes the improved management of the dynamic balance between the operational demands of the fuel cell system and the braking requirements of the vehicle. For example, the flow control valve assembly is typically controlled to direct a majority of the compressed air to the second flow path (connected to an exhaust conduit) during the high power operation of the compressor, thereby maintaining the pressure differential across the fuel cell(s) of the fuel cell system while consuming excess electrical energy.

A maintained pressure balance between the hydrogen pressure level at the inlet(s) of the anode side and the pressure level at the inlet(s) of the cathode side allows for maintaining the fuel cell efficiency and longevity by preventing undue stress on the fuel cell membranes and ensuring consistent energy output.

Determining energy dissipation needs based on braking demand may allow for more effective regenerative braking, capturing kinetic energy that would otherwise be lost and using the energy to supplement the energy needs of the vehicle.

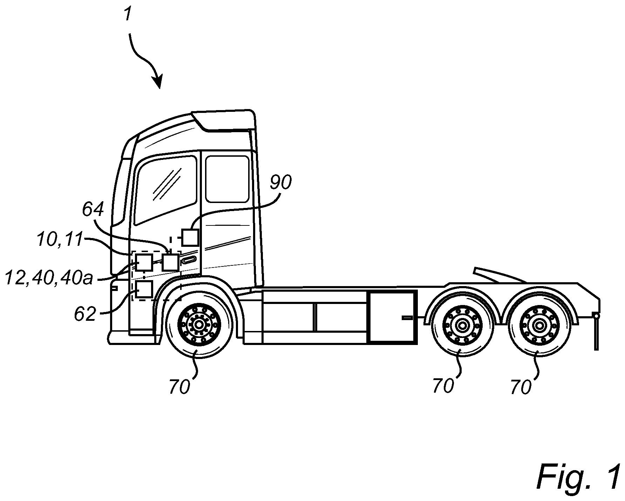

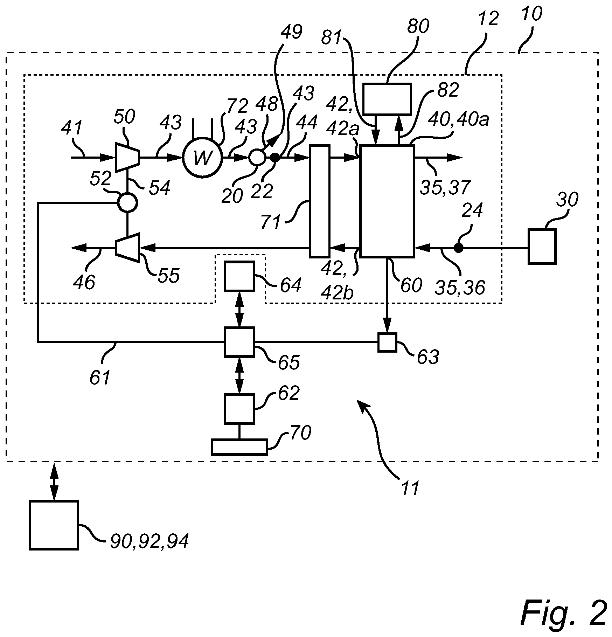

One example of such a system and vehicle will now be described in relation to the example in FIG. 1, in combination with FIGS. 2 to 4.

In FIG. 1, there is illustrated one example of a vehicle 1. The vehicle 1 is here a heavy-duty vehicle, such as a truck. The vehicle 1 comprises an electric powertrain system 11. The electric powertrain system 11 here comprises a battery system 64 and a fuel cell system 12. The fuel cell system 12 comprises one or more fuel cell stacks, such as a first fuel cell stack 40, a second fuel cell stack etc. In one example, the fuel cell system 12 comprises a single fuel cell stack 40. The electric powertrain system 11 further comprises one or more electric machines 62. Each one of the electric machines 62 is configured to provide traction power to one or more wheels.

The vehicle 1 is thus considered a fully electrical vehicle. As the vehicle 1 comprises the fuel cell system, the vehicle 1 may also be denoted as a fuel cell electric vehicle (FCEV). The vehicle 1 may be of any type of vehicle suitable for transporting people and/or goods, such as bulk material from one location to another. For example, the vehicle may be an excavator, loader, articulated hauler, dump truck, truck or any other suitable vehicle known in the art. In some examples, the vehicle 1 may be driven by an operator. In other examples, the vehicle 1 may be an autonomous vehicle that is controlled by a vehicle motion management (VMM) unit configured to individually control vehicle units and/or vehicle axles and/or wheels of the vehicle. For ease of reference, the following description refers to a vehicle 1 in the form of a truck.

The electric powertrain system 11 is configured to provide traction power for the vehicle 1. The traction power is delivered to one or more ground engaging members 70, e.g. one or more wheels of the vehicle 1, by any one of the battery system 64 and the fuel cell system 12 in cooperation with one or more electric machines 62.

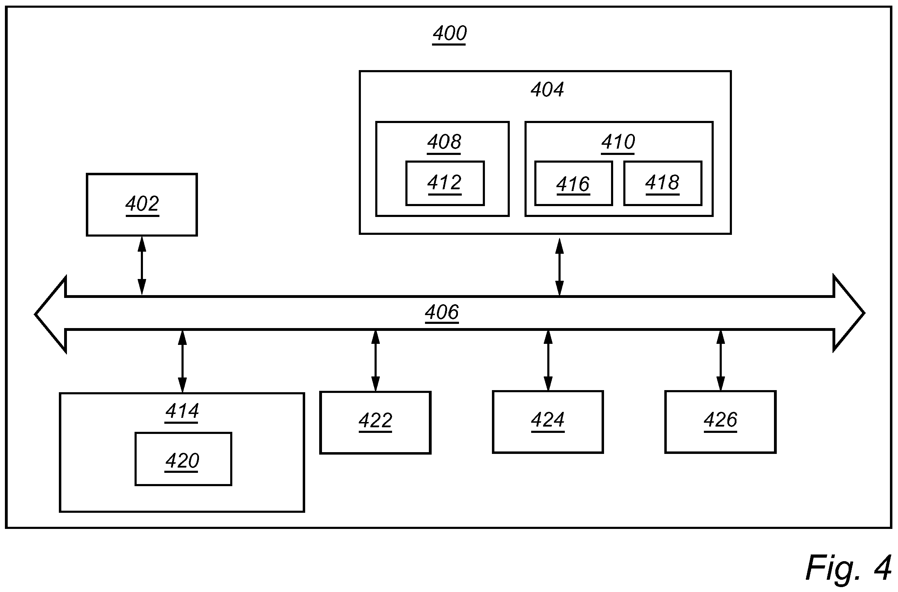

As depicted in FIG. 1, the vehicle 1 comprises a system 10. In this example, the system 10 comprises at least the fuel cell system 12 having at least one fuel cell 40a forming the fuel cell stack 40. The fuel cell system 12 is here an integral part of the electric powertrain system 11. Hence, the system 10 here comprises the electric propulsion system 11. In addition, the system 10 comprises a controller 90. As such, the vehicle 1 comprises the controller 90. In other examples, the controller 90 is an external controller 90 arranged remotely from the vehicle 1. The controller 90 is configured to control various operations and functionalities of the vehicle 1 and the system 10, as will also be described in further detail below. The controller 90 may be an integral part of a computer system. The components and further optional technical details of the controller 90 and the computer system are described in relation to FIG. 4.

In order to describe the system 10 in more detail, reference is made to FIG. 2 which is a schematic illustration of a system according to an example.

As illustrated in FIG. 2, the system 10 comprises the fuel cell system 12. The fuel cell system 12 here comprises the fuel cell stack 40 having multiple fuel cells 40a. The fuel cell stack 40 is arranged to generate electricity to propel the vehicle 1 and to power auxiliary equipment. It should be noted that the fuel cell system 12 may comprise at least one fuel cell 40a. Typically, the fuel cell system 12 comprises a set of fuel cell stacks 40, such as two fuel cell stacks containing corresponding fuel cells. Each one of the fuel cell stacks 40 comprises a plurality of fuel cells 40a. Each one of the fuel cell stacks 40 generally comprises a high number of fuel cells, e.g. 100-300 fuel cells connected in series. The fuel cell system 12 may thus comprise a number of fuel cell stacks having a number of fuel cells, respectively. In other examples, the fuel cell system 12 comprises a single fuel cell stack 40 with a number of fuel cells 40a. While there are several different types of fuel cells, distinguished mainly by the type of electrolyte used, a so-called Proton Exchange Membrane (PEM) fuel cell is particularly suitable for use in heavy-duty vehicles, such as the vehicle in FIG. 1.

The fuel cell system 12 may also comprise additional components as well as a so-called balance of plant system. The balance of plant refers to and encompasses typically all components of the fuel cell system except the fuel cell stack itself.

In FIG. 2, the fuel cell system 12 comprises a coolant system 80. The coolant system 80 is arranged and configured to manage the operating temperature of the fuel cell(s) 40a of the fuel cell system 12. Hence, the fuel cell system 12 typically comprises a coolant inlet 81 and a coolant outlet 82. A coolant (often water or a water-glycol mixture) is circulated through channels (not shown) within the fuel cell system 12. Hence, the coolant inlet 81 is configured to receive coolant from the coolant system 80. The coolant outlet 82 is configured to permit warmed coolant to exit the fuel cell system 12, and optionally direct the warmed coolant to a radiator or the like for cooling of the coolant. The coolant is typically recirculated back into the fuel cell system 12.

The fuel cell system 12 is configured to convert chemical energy from hydrogen fuel into electrical energy through an electrochemical reaction with oxygen from the air, with water being the primary byproduct. As such, as depicted in FIG. 2, the fuel cell system 12 comprises an anode side 35 (hydrogen side) and a cathode side (oxygen side) 42. Thus, the fuel cell 40a comprises the anode side 35 (hydrogen side) and the cathode side (oxygen side) 42.

The anode side 35 has a hydrogen inlet 36 and a hydrogen outlet 37. In FIG. 2, the fuel cell stack 40 of the fuel cell system 12 comprises the hydrogen inlet 36. The hydrogen inlet 36 is fluidly connected to a hydrogen fuel storage system 30 via a fuel supply line for receiving hydrogen gas (fuel). In FIG. 2, the fuel cell stack 40 also comprises the hydrogen outlet 37. The hydrogen outlet 37 is configured to permit unused hydrogen and byproducts (mainly water vapor) to exit the fuel cell system 12.

The hydrogen fuel storage system 30 is configured to store hydrogen fuel, such as high-pressure hydrogen fuel. In the context of the disclosure, high-pressure hydrogen fuel may refer to a pressure of about 700 bar, while low-pressure hydrogen fuel may refer to a pressure of about 11 bar. By way of example, the hydrogen fuel storage system 30 comprises one or more tanks having a volume for storing hydrogen fuel.

The cathode side 42 comprises an air inlet 42a and an air outlet 42b. In FIG. 2, the fuel cell stack 40 comprises the air inlet 42a. The air inlet 42a is configured to receive ambient air (or oxygen-enriched air), thus allowing air to enter the fuel cell(s) of the fuel cell system 12. The air inlet 42a is here fluidly connected to the air inlet duct 41 for receiving fresh air from the atmosphere. The air inlet 43a is fluidly connected to the air inlet duct 41 via an air inlet conduit 43. Accordingly, the fuel cell system 12 comprises the air inlet conduit 43.

The air inlet conduit 43 is in fluid communication with the ambient environment for receiving fresh air. The air inlet conduit 43 fluidly connects the air inlet duct 41 to the air inlet 42a of the fuel cell stack 40. The air inlet duct 41 may include a filter (not shown) to remove particulates.

The air inlet conduit 43 is e.g., a cathode conduit. The air inlet conduit 43 comprises a first flow path 44. The first flow path 44 is configured to route air to the fuel cell 40a of the fuel cell stack 40. Hence, the first flow path 44 is configured to route air to the air inlet 42a.

In FIG. 2, the fuel cell system 12 also comprises an air exhaust conduit 46 with an exhaust outlet to the atmosphere. The air exhaust conduit 46 is in fluid communication with the air outlet 42b. The air exhaust conduit 46 is configured to permit air to exit the fuel cell system 12. More specifically, after participating in the electrochemical reaction at the cathode, the spent air, now depleted in oxygen and enriched in water vapor (and possibly CO₂ in direct carbon fuel cells), exits the fuel cell system 12 via the air outlet 42b. The air outlet 42b also serves to remove excess water produced in the reaction, helping to manage the humidity within the fuel cell(s) of the fuel cell system 12. The air outlet 42b is typically fluidly connected to an outlet conduit forming part of the air exhaust conduit 46. Thus, exhaust flow is supplied from the air outlet 42b of the fuel cell system 12 and into the outlet conduit forming parts of the exhaust outlet 46 (i.e. an exhaust manifold).

Although optional, the fuel cell system 12 may also comprise a humidifier 71, as depicted in FIG. 2. The fuel cell system 12 may also comprise an intercooler 72, as depicted in FIG. 2. The humidifier 71 and the intercooler 72 are common components of the fuel cell system 12, and thus not further described herein.

The system 10 further comprises an electrically powered compressor 50. More specifically, the fuel cell system 12 comprises the electrically powered compressor 50, as depicted in FIG. 2. For ease of reference, the electrically powered compressor may be referred to as the compressor 50. The compressor 50 is disposed in the air inlet conduit 43. The compressor 50 is configured to compress air. As such, the compressor 50 is configured to compress air received from the air inlet duct 41. Moreover, the compressor 50 is in fluid communication with the cathode side 42 via the first flow path 44. More specifically, the compressor 50 is disposed in the air inlet conduit 43 so as to be arranged in fluid communication with the cathode side 42 of the fuel cell(s) 40a of the fuel cell stack 40 via the first flow path 44, as illustrated in FIG. 2.

The compressor 50 is operated by an electric motor 52. Hence, the fuel cell system 12 comprises the electric motor 52. As further described herein, the compressor 50 is drivingly connected to the electric motor 52, and further powered / operated from any source of electrical energy. The electric motor 52 is typically an integral part of the compressor 50. The electric motor 52 may likewise be a separate component in electrical connection with the compressor 50.

As illustrated in FIG. 2, the fuel cell system 12 here comprises an expander 55. The expander 55 is disposed in the air exhaust conduit 46 and downstream of the air outlet 42b. The expander may be a turbine. By way of example, the compressor 50, the expander 55 and the electric motor 52 are coupled to each other by means of the compressor shaft 54. The purpose of the expander 55 is to support the electric motor 52, such that part of the electrical energy/power required by the compressor 50 is provided by the expander 55 and rest is delivered from the electric motor 52.

The compressor 50 is configured to be controlled by the controller 90. More specifically, the compressor 50 is configured to be controlled by a processing circuitry 92 of the controller 90. Hence, the compressor 50 is in communication with the processing circuitry 92. In FIG. 2, the compressor 50 is controlled to pressurize air based on a determined change in the operation of the fuel cells 40a of the fuel cell system 12. Furthermore, the compressor 50 is controlled to pressurize air based on a need for dissipating energy.

The compressor 50 is arranged to receive ambient air, and pressurize ambient air to compressed air. The ambient air is supplied to the compressor 50 via the air filter or directly from the atmosphere, as illustrated in FIG. 2. The pressurized ambient air (compressed air) is subsequently supplied through the air inlet conduit 43 and provided to a flow control valve assembly 20.

Accordingly, the fuel cell system 12 further comprises the flow control valve assembly 20, as depicted in FIG. 2. The flow control valve assembly 20 is disposed in the air inlet conduit 43. The flow control valve assembly 20 is also disposed downstream of the compressor 50. The flow control valve assembly 20 is configured to regulate the flow of compressed air to the cathode side 42. Moreover, as illustrated in FIG. 2, the flow control valve assembly 20 is configured to regulate the flow of compressed air to a second flow path 48. As depicted in FIG. 2, the second flow path 48 is arranged separate from the first flow path 44. In addition, the second flow path 48 is here in fluid communication with the atmosphere via an exhaust duct 49. As such, the second flow path 48 is connected to the exhaust duct 49 so as to discharge compressed air to the atmosphere. It is to be noted that the second flow path 48 is an integral part of the fuel cell system 12. The second flow path 48 is typically further an integral part of the air inlet conduit 43. Moreover, the exhaust duct 49 can be a separate part or an integral part of the air exhaust conduit 46. For example, the exhaust duct 49 and the air exhaust conduit 46 can align into a common air exhaust system (not shown).

The first flow path 44 and the second flow path 48 can be designed in several ways. For example, the first flow path 44 and the second flow path 48 are typically provided in the form of conduits, pipes or hoses.

As also depicted in FIG. 2, the flow control valve assembly 20 is disposed between the compressor 50 and the fuel cell(s) 40a. Hence, the flow control valve assembly 20 is disposed between the compressor 50 and the fuel cell stack 40.

The flow control valve assembly 20 is configured to regulate the flow of compressed air from the compressor 50 to any one of the first flow path 44 and the second flow path 48. The control of the flow control valve assembly 20 is e.g., performed by the controller 90. More specifically, the controller 90 comprises the processing circuitry 92 configured to control the flow control valve assembly 20. Thus, the processing circuitry 92 is in communication with the flow control valve assembly 20. The flow control valve assembly 20 is controllable in several different manners by the processing circuitry 92.

By way of example, the flow control valve assembly 20 is configured to regulate the flow of compressed air from the compressor 50 so that a portion of compressed air is routed to the first flow path 44 and a portion of compressed air is routed to the second flow path 48. In addition, or alternatively, the flow control valve assembly 20 is configured to regulate the flow of compressed air from the compressor 50 so that compressed air is only routed to the first flow path 44. In addition, or alternatively, the flow control valve assembly 20 is configured to regulate the flow of compressed air from the compressor 50 so that compressed air is only routed to the second flow path 48. In addition, or alternatively, the flow control valve assembly 20 is configured to selectively regulate the flow of compressed air from the compressor 50 so that compressed air is selectively routed to the first flow path 44 and the second flow path 48.

The flow control valve assembly 20 can be provided in several different manners. For example, the flow control valve assembly 20 comprises a two-way valve configured to have one inlet for receiving compressed air and two outlets for directing the flow of compressed air to the first flow path 44 and the second flow path 48, respectively. The two-way valve is selected from a group consisting of a linear valve, a butterfly valve, and a bleed valve. These types of valves are configured to have one inlet and two outlets for directing the flow of compressed air. The choice of the two-way valve (linear, butterfly, or bleed valve) for the flow control valve assembly 20 is typically based on its ability to precisely control the flow of compressed air. The specific type of valve may be selected based on the system's design requirements, including flow rate, pressure handling, and response time.

In particular, the flow control valve assembly 20 is controlled to distribute the flow of compressed air between the first flow path 44 and the second flow path 48 based on the determined change in the operation of the fuel cells 40a of the fuel cell system 12.

The change in the operation of the fuel cells 40a of the fuel cell system 12 is determined by the processing circuitry 92 of the controller 90. As such, the processing circuitry 92 is configured to determine a change in the operation of at least one fuel cell 40a.

For example, the change in the operation of at least one fuel cell 40a amounts to a ramping down of the at least one fuel cell 40a. Typically, the processing circuitry 92 is configured to determine a change in the operation of the fuel cell stack 40. In addition, or alternatively, the processing circuitry 92 is configured to determine a change in the operation of all fuel cells 40a of all fuel cell stacks 40 of the fuel cell system 12. As such, the processing circuitry 92 is configured to determine a change in the operation of the fuel cell system 12. In the latter example, the change amounts to a ramping down of the fuel cell system 12. For ease of reference, however, a change in the operation may herein be further described in relation to a fuel cell 40a, although the change in the operation may likewise refer to a change in the operation of a fuel stack 40, a change in the operation of a several fuel cell stacks 40, a change in the operation of the fuel cell system 12 etc.

Typically, the operation of ramping down the fuel cell(s) 40a is due to a lower power demand from the vehicle 1. A lower power demand from the vehicle 1 means that less power is needed from the fuel cell(s) 40a. As such, the processing circuitry 92 typically controls the fuel cell system 12 to generate less electrical energy, i.e. the processing circuitry 92 determines to ramping down the electrical energy generation in the fuel cell(s) 40a.

Furthermore, the flow control valve assembly 20 is controlled to distribute the flow of compressed air between the first flow path 44 and the second flow path 48 based on the need for dissipating energy from the system 10. The need for dissipating energy is determined by the processing circuitry 92 of the controller 90. As such, the processing circuitry 92 is configured to determine the need for dissipating energy from the system 10.

In FIG. 2, the need for dissipating energy from the system 10 is determined based on data indicative of a need for dissipating energy due to a braking demand of the vehicle 1.

Further, the processing circuitry 92 of the controller 90 is configured to determine a pressure level of the compressed air in the first flow path 44. By way of example, the pressure level of the compressed air in the first flow path 44 is monitored by a first pressure sensor 22. The first pressure sensor 22 is disposed in the first flow path 44. The first pressure sensor 22 is e.g., a conventional pressure sensor for measuring fluid pressures. The first pressure sensor 22 is in communication with the processing circuitry 92. The reading from the first pressure sensor 22 is transferred to the processing circuitry 92 for further processing. As such, the pressure level of the compressed air in the first flow path 44 is thus determined by the processing circuitry 92. In some examples, the processing circuitry 92 is configured to monitor the pressure level of the compressed air in the first flow path 44. The pressure level of the compressed air in the first flow path 44 can be monitored in other ways by other pressure measuring systems.

As such, the pressure level of the compressed air is monitored at the cathode side 42, and upstream of the air inlet 42a, which is also upstream of the fuel cell(s) 40a. Moreover, the pressure level of the compressed air is determined downstream of the compressor 50. In one example, the pressure level of compressed air in the first flow path 44 is determined downstream of the flow control valve assembly 20. The pressure level of compressed air in the first flow path 44 may likewise be determined upstream of the flow control valve assembly 20.

In addition, the processing circuitry 92 of the controller 90 is configured to determine a hydrogen pressure level of the hydrogen gas supplied at the anode side 35, i.e. supplied to the hydrogen inlet 36. The hydrogen pressure level is thus monitored upstream of the fuel cell(s) 40a. By way of example, the hydrogen pressure level at the hydrogen inlet 36 of the anode side 35 is monitored by a second pressure sensor 24. The second pressure sensor 24 is disposed in, or at, the hydrogen inlet 36 of the anode side 35. The second pressure sensor 24 is thus disposed upstream of the fuel stack 40 in the first flow path 44. The second pressure sensor 24 is e.g. a conventional pressure sensor for measuring fluid pressures. The second pressure sensor 24 is in communication with the processing circuitry 92. The reading from the second pressure sensor 24 is transferred to the processing circuitry 92 for further processing. As such, the hydrogen pressure level is thus determined by the processing circuitry 92. In some examples, the processing circuitry 92 is configured to monitor the hydrogen pressure level of the hydrogen gas. The hydrogen pressure level of the hydrogen gas can be monitored in other ways by other pressure measuring systems.

Based on the determined hydrogen pressure level and the air pressure level, the processing circuitry 92 is able to monitor and control the pressure balance in the fuel cell system 12 when the compressor 50 is operating at high power.

Moreover, based on the determined hydrogen pressure level and the determined air pressure level, the flow control valve assembly 20 is controlled to distribute the flow of compressed air between the first flow path 44 and the second flow path 48 so as to maintain the pressure balance between the hydrogen pressure level at the hydrogen inlet 36 of the anode side 35 and the air pressure level at the air inlet 42a of the cathode side 42.

Typically, the processing circuitry 92 is configured to control the operation of the compressor 50 and the flow control valve assembly 20 based on the determined change in the operation of the fuel cell(s) 40a and the determined need for dissipating energy from the system 10. As mentioned above, the control valve assembly 20 is controlled to distribute the flow of compressed air between the first flow path 44 and the second flow path 48 so as to maintain a pressure balance between the hydrogen pressure level at the hydrogen inlet 36 of the anode side 35 and the air pressure level at the air inlet 42a of the cathode side 42.

Accordingly, the processing circuitry 92 collectively controls the compressor 50 and the flow control valve assembly 20 such that the compressor 50 is controlled to compress air based on the determined operational change of the fuel cell(s) 40a and data indicative of the need for dissipating energy from the system 10 due to the braking demand of the vehicle 1, while the flow control valve assembly 20 is controlled to distribute the flow of compressed air between the first flow path 44 and the second flow path 48 so as to maintain a pressure balance between the hydrogen pressure level at the hydrogen inlet 36 of the anode side 35 and the air pressure level at the air inlet 42a of the cathode side 42.

Hence, the compressor 50 is controlled to operate for energy consumption in conjunction with a higher need to brake the vehicle 10 (when excessive energy occurs because the electric machine 62 generates energy during regenerative braking, i.e. the electric machine operates in the generator mode), while the flow control valve assembly 20 is controlled to regulate the flow of compressed air (oxygen) between the inlet 42a to the fuel cell(s) 40a and the exhaust duct 49. To this end, the compressor 50 can run at a high level in conjunction with a braking demand to consume energy but instead of sending the compressed air to the fuel cell(s) 40a, the flow control valve assembly 20 is controlled to partially or completely send the compressed air to the exhaust duct 49 via the second flow path 48. In this way, the compressor 50 can operate at a high level while maintaining the pressure difference.

By integrating the flow control valve assembly 20 as a pressure management mechanism downstream of the compressor 50, but upstream of the inlet(s) 42a of the fuel cell(s) 40a, the system 10 is configured to provide a more precise control of the air flow in response to the pressure differential across the fuel cell system 10. Moreover, by maintaining the pressure balance between the hydrogen pressure level at the anode inlet side 35 and the pressure level at the cathode inlet side 42, the system 10 provides enhanced protection of the fuel cell membranes by preventing excessive pressure gradients that can lead to long-term damage. The system 10 also provides for improved system efficiency through the maintenance of the desired operating conditions, even during vehicle braking and regenerative braking situations. Also, the system 10 provides for increased utility of the compressor 50, allowing the compressor 50 to consume excess electrical energy by operating at higher power levels, when necessary, thereby enhancing the overall energy management of the vehicle 1.

The arrangement and configuration of the flow control valve assembly 20 provides flexibility in system operation by enabling the control valve to variably direct compressed air to the fuel cell(s) 40a or bypass it to the exhaust duct 49, based on the real-time demands (braking demand) and conditions (pressure levels).

In some examples, the processing circuitry 92 is further configured to compare the monitored pressure level of the compressed air and the monitored hydrogen pressure level. In this manner, the processing circuitry 92 is configured to monitor the pressure balance between the hydrogen pressure level at the hydrogen inlet 36 and the pressure level at the air inlet 42a.

The fuel cell system 12 typically comprises an electric power output 60. The electric power output may comprise a positive electric terminal and a negative electric terminal. The positive electric terminal is the positive output of the electrical energy generated by the fuel cell system 12. The positive electric terminal is connected to the electrical system of the vehicle 1, including the components making up the electric powertrain system 11, as also shown in FIG. 2. The positive electric terminal may also be configured to connect to an external circuit to supply power. The negative electric terminal completes the electrical circuit. Together with the positive electric terminal, the negative electric terminal allows for the flow of electrons generated from the electrochemical reaction within the fuel cell(s) of the fuel cell system 12 to e.g., various external circuits.

To sum up, the electric power output 60 is electrically connected to e.g., the battery system 64 and the electrical machine 62, as depicted in FIG. 2.

As mentioned herein, the compressor 50 is controllable to pressurize air in the air conduit 43. In this manner, the compressor 50 pressurizes the air so as to deliver compressed air to the fuel cell(s) 40a of the fuel cell system 12. In this example, the compressor 50 is controllable to pressurize air in response to the determined need for dissipating energy. As further described herein, the compressor 50 is controllable to pressurize air in response to a determined need for dissipating excessive energy caused by regenerative braking and typically from excessive energy transferred from the electric powertrain system 11 through a junction unit 65.

In FIG. 2, the electric power output 60 from the fuel cell system 12 is electrically connected to a junction unit 65, The junction unit 65 is typically an integral part of the electric powertrain system 11.

Typically, the fuel cell system 12 is an integral part of the electric powertrain system 11. In other systems, the fuel cell system 12 may be a separate part of the system 10, which is electrically connected to the electric powertrain system 11.

The electric powertrain system 11 typically also comprises at least one electric machine 62. Electric machines 62 are responsible for converting electrical energy from the battery system 64 or fuel cell system 12 into mechanical power to drive the wheels 70. The electric machine 62 is thus configured to provide traction power to the vehicle 1. The electric machine 62 is configured to be connected to a battery system 64 and the fuel cell(s) 40a of the fuel cell system 12.

Accordingly, the electric powertrain system 11 here also comprises the battery system 64. By way of example, the battery system 64 comprises high-energy-density lithium-ion battery cells, designed to store electrical energy efficiently.

In FIG. 2, the battery system 64 is electrically connected via the junction unit 65 to the electrical machine 62, while the fuel cell system 12 is configured to supply energy to the electrical machine 62 and/or delivers power to the battery system 64 via the junction unit 65. As such, the junction 65 box serves as a central point for distributing electrical power from the fuel cell system 12, the battery system 62 and potentially other energy sources (like regenerative braking systems) to the electric machine 62 and other electrical loads in the vehicle, such as lighting, infotainment systems, and climate control. To this end, the junction unit 65 is arranged and configured to control the distribution of electrical power.

In particular, the junction unit 65 is arranged and configured to route the electrical power generated during vehicle braking back to the battery system 64 for storage or directly to the electric machine 62 for immediate use in the electric powertrain system 11. In this example, the junction unit 65 is also arranged and configured to route excessive electrical energy (or electrical power) to the compressor 50. Hence, the system 10 typically comprises an electrical connection 61 from the junction unit 65 to the compressor 50, as illustrated in FIG. 2.

The transfer of electrical energy typically passes through a DC/DC converter 63 (FIG. 2), as is commonly known in the field of fuel cell electric vehicles.

It should be noted that the electric powertrain system 60 may be provided with a plurality of electric machines 62. Hence, the electric powertrains system 60 may comprise one or more electric machines 62. Each one of the electric machines 62 is configured to be connected to the battery system 64 and the fuel cell system 12, either individually connected or collectively connected.

Put differently, the fuel cell system 12 together with the battery system 64 and the electric machine 62 form parts of the electric powertrain system 11 for providing traction power to the vehicle 1. The electric machine 62 is a traction motor for providing traction power to the vehicle 1, i.e. for propelling the wheels 70 of the vehicle 1. The fuel cell system 12 is connected to the electrical machine 62 to provide power to the electrical machine 62, thereby the electrical machine 62 can provide traction power to the wheels 70. The electric machine 62 may generally include a conventional electric motor.

In a similar vein, the battery system 64 is electrically connected to the electrical machine 62 to provide power to the electrical machine 62.

The battery system 64 and the fuel cell system 12 can be arranged in parallel, whereby each one of the battery system 64 and the fuel cell system 12 are connected to the electric machine 62. The battery system 64 and the fuel cell system 12 may likewise be arranged in series, whereby the battery system 64 and the fuel cell system 12 are connected to the electric machine 62 in a slightly different way.

The junction unit 65 is typically configured to connect the fuel cell system 12 to the battery system 64 and the traction electric machine 62. Traction power to the wheels 70 is delivered by any one of the battery system 64, the electric machine 62 and the fuel cell system 12. The fuel cell system 12 is electrically connected to the junction unit 65 via the electrical power output connection. The battery system 64 is connected to the junction unit 65 by a corresponding electrical connection. By way of example, the battery system 64 is connected via the junction unit 65 to the traction electric machine 62 that provides traction power to the vehicle, while the fuel cell system 12 supplies electrical energy to the electric machine 62 and/or delivers power to the battery system 64 via the junction unit 65, as is commonly known in the field of fuel cell electric vehicles.

Accordingly, the system 10 comprises the electric powertrain system 11 configured to provide power to the vehicle 1 and is further controllable as an electrical energy dissipating system for powering the compressor 50 in response to the determined need for dissipating energy.

Although not shown, the electric powertrain system 60 may further comprise additional components as are readily known in the field of electrical propulsion and drive systems, such as a transmission for transmitting a rotational movement from the electric machine(s) 62 to a propulsion shaft, sometimes referred to as the drive shaft. The propulsion shaft connects the transmission to the wheels. Some vehicles may use a traditional multi-speed transmission, while others employ single-speed transmissions or direct-drive configurations for simplicity and efficiency.

Furthermore, although not shown, the electrical machine 62 is typically coupled to the transmission by a clutch. The electric machine 62 is arranged to receive electric power from any one of the battery system 64 and the fuel cell system 12. The electric machine 62 is typically also arranged as a traction motor for the vehicle 1.

The electric powertrain system 11 typically also comprises one or more DC-DC converters (not shown). The DC/DC converters may interface the fuel cell system 12 and the battery system 64 to a DC bus voltage (DC-link). A DC-DC converter is used to regulate and manage the electrical power between the high-voltage system (battery system or fuel cell system) and the low-voltage system, which powers accessories and the vehicle's electrical subsystems.

The electric powertrain system 11 typically also comprises a DC/AC inverter. The DC/AC inverter is responsible for converting the direct current (DC) power from the battery system or fuel cell system into alternating current (AC) power required by the electric machine(s). The DC/AC inverter is configured to control the speed and torque of the electric machine(s) 62, contributing to overall vehicle performance and efficiency.

Turning again to the operation of the compressor 50 in response to the determined need for dissipating energy. By way of example, the controller 90 is configured to determine the need for dissipating energy in response to a braking demand of the vehicle 1. As such, the controller 90 is configured to determine the braking demand by determining an amount of possible energy from a regenerative braking event of the vehicle 1.

By way of example, the compressor 50 is controllable to pressurize air in response to a control signal containing data indicative of a need for dissipating energy in the system 10 due to the braking demand of the vehicle 1.

Moreover, in this example, the controller 90 is configured to determine the need for dissipating energy using topography data of the route.

As further illustrated, the controller 90 comprises processing circuitry 92. The processing circuitry 92 is configured to control the system 10 to control energy dissipation.

In FIG. 2, the controller 90 also comprises a memory 94 and a system bus (although not shown). These components and further optional technical details of the controller 90 are described in relation to FIG. 4.

The compressor 50 is powered by the electric motor 52 which receives electric power from one or more electrical energy sources, such as the battery system 64, the traction electric machine 62 and the fuel cell system 12. As such, the compressor 50 is in electrical connection with the battery system 64, the traction electric machine 62 and the fuel cell system 12. In FIG. 2, the compressor 50 is in electrical connection with the battery system 64, the traction electric machine 62 and the fuel cell system 12 via the junction unit 65.

During operation of the vehicle 1, i.e. when the traction electric machine 62 operates as a generator to control the vehicle speed, i.e. the vehicle 1 operates in the regenerative braking mode, electric power is transmitted from the traction electric machine 62 to the battery system 64. If the battery system 64 is not able to receive all, or parts of the electric power generated by the traction electric machine 62, for example because of a current electric charging capacity, i.e. the level of electric power the battery is able to receive until being fully charged or has reached its maximum allowed state of charge level, the excess electric power should preferably be dissipated. In the present case, the battery system 64 is controlled, e.g. by the controller 90, to supply electric power to the electric motor 52 of the system. In addition, or alternatively, the traction electric machine 62 operating in its generator mode to generate electrical energy may directly supply electrical energy to the electric motor 52 that is operating to power, and thus move, the compressor 50 so as to pressurize the hydrogen fuel 22. As such, the compressor 50 is electrically operated by the corresponding electric motor 52, which is connected to the junction unit 65 so as to receive power from any one of the battery system 64, the traction electric machine 62, and the fuel cells of the fuel cell system 12.

By way of example, the electric motor 52 is, by the received electric power, rotating a shaft 54 connected to the compressor 50 so as to operate the compressor 50. The connection between the electrically operable compressor 50 and the electric motor 52 is thus mechanical, i.e. an output shaft of the electric motor 52 is coupled to the compressor 50. The compressor 50 then pressurizes the air and supplies the compressed air to the flow control valve assembly 20 for further regulation, as described herein.

FIG. 2 further illustrates one example of electrically connecting the electric motor 52 of the compressor 50 to the electrical energy sources by the junction unit 65. As such, the compressor 50 is in electrical connection with the battery system 64, the traction electric machine 62 and the fuel cell system 12 via the junction unit 65. In particular, the compressor 50 is in electrical connection with the junction unit 65 via the electrical connection 61, as depicted in FIG. 2.

The controller 90 is in communication with the compressor 50, the battery system 64, the traction electric machine 62, the fuel cell system 12 and the junction unit 65. As such, the controller 90 is in communication with the electric powertrain system 11.

Moreover, as mentioned above, the controller 90 is configured to operate the compressor 50 in response to a need for dissipating electrical energy from the vehicle 1. In addition, the controller 90 is configured to control the flow of electrical energy from the electric powertrain system 11 to the compressor 50 in response to the need for dissipating electrical energy. In this manner, the controller 90 is configured to operate the electric powertrain system 11 as an electrical energy dissipating system for powering the electrically powered compressor 50 in response to the determined need for dissipating energy.

A number of examples of when there may be a need for dissipating energy from the vehicle will hereinafter be described.

By way of example, the controller 90 is configured to operate the compressor 50 in response to a need for dissipating electrical energy from the vehicle 1 in response to a control signal containing data indicative of a need for dissipating electrical energy due to a braking demand of the vehicle 1.

In this manner, the controller 90 is configured to be used as a braking energy management system. As described herein, the braking demand amounts to an energy dissipation situation where there is a need for managing excessive energy generated. Such excessive energy may occasionally be generated due to a predicted or prevailing braking operation.

The control signal is generally received at the controller 90. Hence, the controller 90 is configured to receive one or more control signals containing data indicative of at least a braking demand of the vehicle 1. In response to the received one or more control signals, the controller 90 is configured to operate the compressor 50, as described further herein. The other components of the system 10 may also be at least partly operated on the basis of the one or more control signals, as described herein.

The controller 90 may also be configured to control the compressor 50 in response to one or more control signals further containing data indicative of a fuel cell system load. The data indicating the fuel cell system load is generally a measure of the current fuel cell system load. In other situations, the data indicating the fuel cell system load is a measure of a predicted fuel cell system load.

In addition, or alternatively, the controller 90 is configured to control the compressor 50 in response to a determined need for dissipating energy when the traction electric machine 62 operates in a traction mode and there is a determined surplus of electrical energy. Such situation may e.g. occur when there is a desire not to shut-off the fuel cell(s) or a desire not to reduce the power output from the fuel cell(s) due to a predicted power demand on the fuel cell(s) for operating the vehicle 1. In the latter situation, such reduction of the power output from the fuel cell(s) may have a negative impact on the fuel cell(s).

In addition, or alternatively, the controller 90 is configured to control the compressor 50 in response to a determined need for dissipating energy when the traction electric machine 62 is in a non-operative mode and the vehicle 1 is at stand-still. Such situation may e.g. occur when the vehicle 1 is controlled into the stand-still operation while the SOC of the battery system 64 is high. In this context, the term "non-operative mode" of the traction electric machine 62 means a mode of the traction electric machine 62 where there is no ongoing conversion of energy. In this context, the term "stand-still of the vehicle" refers to an operating situation of the vehicle 1 where there is no traction power (from any energy source) provided to the wheels 70 of the vehicle 1.

In addition, or alternatively, the controller 90 is configured to control the compressor 50 in response to a determined need for dissipating energy when the electric machine 62 is in a non-operative mode, the vehicle 1 is at stand-still and with the fuel cell(s) operating in an active state for producing electrical energy. Such situation may e.g. occur when the vehicle 1 is controlled into the stand-still operation while the SOC of the battery system 64 is high. Moreover, during the stand-still of the vehicle 1, it may also be desirable to dissipate electrical energy in a situation where the vehicle 1 is equipped with an electric power take-off, ePTO, system and there is a desire to operate the ePTO with a low power output by means of the fuel cell(s), but the power level of the fuel cell(s) exceeds the required power for powering the ePTO and the SOC of the battery system 64 is high. In such situation, it may not be desirable to shut-off the fuel cell(s) completely, e.g. if the ePTO is only predicted to be operated for a short period of time until the vehicle is to be set in a driving mode.

Moreover, in this example, the controller 90 is configured to control the compressor 50 in response to the determined need for dissipating energy from the system 10 and/or the vehicle 1, while the flow control valve assembly 20 is controlled by the processing circuitry 92 to direct a majority of the compressed air to the second flow path 48 (connected to the exhaust conduit 49) during the high power operation of the compressor 50, thereby maintaining the pressure differential across the fuel cell(s) 40a of the fuel cell system 12, while consuming excess electrical energy.

For example, the processing circuitry 92 is configured to operate the compressor 50 at a higher power level during regenerative braking to consume excess electrical energy.

In addition, or alternatively, the processing circuitry 92 is configured to operate the compressor 50 at the higher power level based on power from any one of the electric machine 62 operating in a generator mode and the battery system 64. As mentioned herein, the processing circuitry 92 is configured to determine the need for dissipating energy due to the braking demand of the vehicle 1 by determining an amount of possible energy from a regenerative braking event of the vehicle. In response to this determination, the compressor 50 is controlled to be operated at a higher power level during regenerative braking to consume excess electrical energy.

The need for dissipating excessive energy from the vehicle 1 can be determined or estimated in several different manners. In one example, the need for energy dissipation is determined by calculating excessive electrical energy, which can e.g. be derived by determining the sum between predicted electrical energy consumption and predicted energy production over a given period of time. By way of example, the controller 90 is configured to determine the need for dissipating electrical energy by determining the sum of a power level of the traction electric machine 62, a power level of the fuel cell(s), a power level of the battery system 64. Optionally, the controller 90 also includes any power demand from one or more auxiliaries (such as pumps and fans) and any power losses in the system / vehicle. It should be noted that traction electric machine power can be negative or positive depending on whether the electric machine operates in its regenerative mode (generator mode) or traction mode. It may also be noted that the battery system power level can be limited due to a high SOC. The battery system power level can also be limited due to temperature or other factors.

Typically, the controller 90 is configured to determine the excessive electrical energy by means of any one of an algorithm stored in the memory 94 of the controller 90, a look-up table stored in the memory 94, including data of current and/or expected electrical energy consumptions by, or in, the vehicle 1, as mentioned above. The controller 90 will then compare the determined sum with e.g. a threshold level indicative of an amount of surplus electrical energy. Hence, if the determined sum is above the threshold level, the controller 90 determines that there is a need for dissipating electrical energy by transferring electrical energy to the electrical motor 52 and the compressor 50. Other options are also conceivable depending on the type of vehicle and system.

The need for dissipating excessive energy due to the braking demand of the vehicle 1 can be determined or estimated in several different manners. By way of example, the controller 90 is configured to determine the need for dissipating excessive energy due to the braking demand of the vehicle 1 by determining an amount of possible excessive energy due to the braking demand. Typically, although strictly not required, the provision of determining an amount of possible excessive energy from the braking event of the vehicle 1 is determined during a regenerative braking event. In other situations, the excessive energy is predicted by the controller 90 from an up-coming braking event of the vehicle 1 in advance based on one or more operational parameters, as mentioned herein.

The amount of possible excessive energy from the braking event of the vehicle 1 is favorably determined based on one or more operational parameters of the vehicle 1. By way of example, the operational parameter contains any one of the following data: data relating to an upcoming vehicle path, such as a downhill and uphill path; data relating to a change in vehicle speed, data relating to a change in acceleration, data relating to state-of-charge, SOC, of the electrical energy storage system, data relating to the state of life of the fuel cell(s), characteristics of the electric machine, and data relating to the weight of the vehicle 1, data indicating type of vehicle 1.

By way of example, the amount of possible excessive energy is determined by estimating the total electric energy storage level of the vehicle 1. The total energy level of the vehicle 1 here comprises different sets of data comprising one or more of the operational parameters. By way of example, the total energy level includes data indicating state-of-charge SOC of the battery system 62 and state-of-operation of the fuel cell(s) of the fuel cell system 12 of the vehicle 1. The total energy storage level may also be determined on the basis of the state of life of the battery system 64 and the state of life of the fuel cell(s) of the fuel cell system 12. In addition, or alternatively, the total energy level may include current energy need for powering auxiliaries of the vehicle 1, such as air conditioning systems and pneumatic devices. In addition, or alternatively, the total energy level may include predicted future energy need of the vehicle 1 for a given time period. Such data can be gathered by various sensors (not shown) and processed by the controller 90, as is commonly known in the art. To this end, the total energy level of the vehicle 1 may correspond to the prevailing SOC of the battery system 64, while also including predictive energy demands for the vehicle 1 for a given time period.

The controller 90 is favorably also configured to deactivate the compressor 50 if the control signal indicates non-braking demand and no fuel cell system load.

It should be noted that in the above description, the various states and loads of the fuel cell system 12, i.e. the high load, intermediate load, low load and no load, are typically determined by using threshold levels. Such threshold levels can be predetermined thresholds or dynamically defined thresholds. By way of example, such threshold levels can be derived from a look-up table stored in a memory of the controller 90. Typically, the load on the fuel cell system 12 corresponds to a continuous power ramping up or down rather than fixed levels. Other options are also conceivable depending on the type of vehicle, system and controller.

In one example, the system 10 further incorporates predictive information from a route planning or a navigational system, utilizing topography data in the form of route data, GPS/GNSS data, and map data as input, to determine the timing for activating different braking strategies, including the above examples. This predictive approach allows for the anticipatory activation of the appropriate braking operation based on the current position of the vehicle, the projected path, and expected changes in terrain or traffic conditions. By managing when and how to implement these strategies, the system 10 is configured to enhance the overall energy efficiency and braking performance, ensuring that the regenerative braking energy is utilized effectively and that the hydrogen storage and recompression process is employed at advantageous moments during the journey.

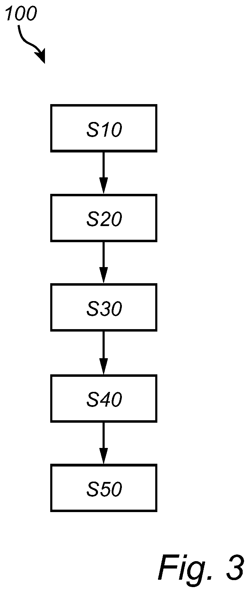

FIG. 3 is a flow chart of a method according to an example. More specifically FIG. 3 is an exemplary computer implemented method 100 according to an example. The computer-implemented method 100 is intended for controlling the system 10 of the vehicle 1.

The method is generally implemented by the processing circuitry 92 of the controller 90. As illustrated in FIG. 3, the computer-implemented method 100 comprises the steps of determining S 10, by the processing circuitry 92, a change in the operation of the at least one fuel cell, wherein the change amounts to a ramping down of the at least one fuel cell; determining S20, by the processing circuitry of the controller, a need for dissipating energy from the system based on data indicative of a need for dissipating energy due to a braking demand of the vehicle; monitoring S30, by the processing circuitry of the controller, a hydrogen pressure level at an inlet of the anode side; monitoring S40, by the processing circuitry of the controller, a pressure level of the compressed air in the first flow path; and controlling S50, by the processing circuitry of the controller, the operation of the electrically powered compressor and the flow control valve assembly based on the determined change in the operation of the at least one fuel cell and the need for dissipating energy, wherein the control valve assembly is controlled to distribute the flow of compressed air between the first flow path and the second flow path so as to maintain a pressure balance between the monitored hydrogen pressure level and the monitored pressure level of the compressed air.

It should also be noted that the processing circuitry 92 may take the coolant pressure in the coolant system 80 into consideration when controlling the compressor 50 to maintain the pressure balance over the fuel cell(s) 40a.Thus, in some examples, the system 10 may be configured to monitor a pressure level of the coolant in the coolant system 80 and control the operation of the compressor 50 and the flow control valve assembly 20 based on the determined change in the operation of the at least one fuel cell and the need for dissipating energy, wherein the flow control valve assembly 20 is controlled to distribute the flow of compressed air between the first flow path 44 and the second flow path 48 so as to maintain a pressure balance between the monitored hydrogen pressure level, the monitored pressure level of the compressed air and the monitored pressure level of the coolant. For example, the coolant pressure refers to the coolant pressure downstream of a pump (not shown) of the coolant system 80. The coolant pressure can be monitored by a corresponding pressure sensor.

In some examples, there is provided a computer program product comprising program code for performing, when executed by the processing circuitry 92, the method 100 as described above.

In some examples, there is provided a non-transitory computer-readable storage medium comprising instructions, which when executed by the processing circuitry 92, cause the processing circuitry 92 to perform the method 100 as described above.

It should be noted that the controller 90 may be an integral part of the electric powertrain system 12. In other examples, the controller 90 and the electric powertrain system 12 may be separate parts configured to communicate with each other. The controller 90 may e.g. be a part of a remote server or the like. Hence, in some examples, the system 10 comprises the electric powertrain system 12 and the controller 90, wherein the controller 90 is configured to be in communication with the electric powertrain system 12 so as to control energy or power utilization from the electric powertrain system 12, as described herein.

Further details of one example of a computer system that can be used as the controller 90 will now be described in relation to FIG. 4.

FIG. 4 is a schematic diagram of a computer system 400 for implementing the examples disclosed herein. The computer system 400 is adapted to execute instructions from a computer-readable medium to perform these and/or any of the functions or processing described herein. The computer system 400 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 400 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 400 may comprise at least one computing device or electronic device capable of including firmware, hardware, and/or executing software instructions to implement the functionality described herein. The computer system 400 may include processing circuitry 402 (e.g., processing circuitry including one or more processor devices or control units), a memory 404, and a system bus 406. The computer system 400 may include at least one computing device having the processing circuitry 402. The system bus 406 provides an interface for system components including, but not limited to, the memory 404 and the processing circuitry 402. The processing circuitry 402 may include any number of hardware components for conducting data or signal processing or for executing computer code stored in memory 404. The processing circuitry 402 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 402 may further include computer executable code that controls operation of the programmable device.

The system bus 406 may be any of several types of bus structures that may further interconnect to a memory bus (with or without a memory controller), a peripheral bus, and/or a local bus using any of a variety of bus architectures. The memory 404 may be one or more devices for storing data and/or computer code for completing or facilitating methods described herein. The memory 404 may include database components, object code components, script components, or other types of information structure for supporting the various activities herein. Any distributed or local memory device may be utilized with the systems and methods of this description. The memory 404 may be communicably connected to the processing circuitry 402 (e.g., via a circuit or any other wired, wireless, or network connection) and may include computer code for executing one or more processes described herein. The memory 404 may include non-volatile memory 408 (e.g., read-only memory (ROM), erasable programmable read-only memory (EPROM), electrically erasable programmable read-only memory (EEPROM), etc.), and volatile memory 410 (e.g., random-access memory (RAM)), or any other medium which can be used to carry or store desired program code in the form of machine-executable instructions or data structures and which can be accessed by a computer or other machine with processing circuitry 402. A basic input/output system (BIOS) 412 may be stored in the non-volatile memory 408 and can include the basic routines that help to transfer information between elements within the computer system 400.

The computer system 400 may further include or be coupled to a non-transitory computer-readable storage medium such as the storage device 414, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 414 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 414 and/or in the volatile memory 410, which may include an operating system 416 and/or one or more program modules 418. All or a portion of the examples disclosed herein may be implemented as a computer program 420 stored on a transitory or non-transitory computer-usable or computer-readable storage medium (e.g., single medium or multiple media), such as the storage device 414, which includes complex programming instructions (e.g., complex computer-readable program code) to cause the processing circuitry 402 to carry out actions described herein. Thus, the computer-readable program code of the computer program 420 can comprise software instructions for implementing the functionality of the examples described herein when executed by the processing circuitry 402. In some examples, the storage device 414 may be a computer program product (e.g., readable storage medium) storing the computer program 420 thereon, where at least a portion of a computer program 420 may be loadable (e.g., into a processor) for implementing the functionality of the examples described herein when executed by the processing circuitry 402. The processing circuitry 402 may serve as a controller or control system for the computer system 400 that is to implement the functionality described herein.

The computer system 400 may include an input device interface 422 configured to receive input and selections to be communicated to the computer system 400 when executing instructions, such as from a keyboard, mouse, touch-sensitive surface, etc. Such input devices may be connected to the processing circuitry 402 through the input device interface 422 coupled to the system bus 406 but can be connected through other interfaces, such as a parallel port, an Institute of Electrical and Electronic Engineers (IEEE) 1394 serial port, a Universal Serial Bus (USB) port, an IR interface, and the like. The computer system 400 may include an output device interface 424 configured to forward output, such as to a display, a video display unit (e.g., a liquid crystal display (LCD) or a cathode ray tube (CRT)). The computer system 400 may include a communications interface 426 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A system 10 for a vehicle, the system comprising a fuel cell system 12 having at least one fuel cell 40, 40a with an anode side 35 and a cathode side 42, an electrically powered compressor 50 for compressing air and is further configured to be in fluid communication with an air inlet 42a of the cathode side 42 via a first flow path 44, a flow control valve assembly 20 disposed downstream of the electrically powered compressor 50, the flow control valve assembly 20 being configured to regulate the flow of compressed air to the cathode side 42 and to a second flow path 48 connectable to an exhaust duct, the second flow path 48 being separate from the first flow path 44, wherein the system 10 further comprises a controller 90 having processing circuitry 92 configured to determine a change in the operation of the at least one fuel cell 40, 40a, wherein the change in the operation amounts to a ramping down of the at least one fuel cell 40, 40a; determine a need for dissipating energy from the system 10 based on data indicative of a need for dissipating energy due to a braking demand of the vehicle; monitor a hydrogen pressure level at an inlet 36 of the anode side 35; monitor a pressure level of the compressed air in the first flow path 44; and control the operation of the electrically powered compressor 50 and the flow control valve assembly 20 based on the determined change in the operation of the at least one fuel cell 40, 40a and the need for dissipating energy, wherein the flow control valve assembly 20 is controlled to distribute the flow of compressed air between the first flow path 44 and the second flow path 48 so as to maintain a pressure balance between the monitored hydrogen pressure level and the monitored pressure level of the compressed air.

Example 2. The system of the previous example, wherein the processing circuitry 92 is configured to compare the monitored pressure level of the compressed air and the monitored hydrogen pressure level so as to monitor the pressure balance.

Example 3. The system of the previous example or the example before, wherein the pressure level of the compressed air in the first flow path 44 is monitored by a first pressure sensor 22.

Example 4. The system of any previous examples, wherein the hydrogen pressure level at the anode inlet side 35 is monitored by a second pressure sensor 24.

Example 5. The system of any previous examples, wherein the processing circuitry 92 is configured to determine the need for dissipating energy due to the braking demand of the vehicle by determining an amount of possible energy from a regenerative braking event of the vehicle.

Example 6. The system of any previous examples, wherein the processing circuitry 92 is configured to operate the compressor 50 at a higher power level during regenerative braking to consume excess electrical energy.

Example 7. The system of any previous example, wherein the processing circuitry 92 is configured to operate the compressor 50 at the higher power level based on power from any one of an electric machine 62 operating in a generator mode and a battery system 64.

Example 8. The system of any previous examples, wherein the flow control valve assembly 20 comprises a two-way valve configured to have one inlet for receiving compressed air and two outlets for directing the flow of compressed air to the first flow path 44 and the second flow path 48, respectively.

Example 9. The system of any previous examples, wherein the two-way valve is selected from a group consisting of a linear valve, a butterfly valve, and a bleed valve, each configured to have one inlet and two outlets for directing the flow of compressed air.

Example 10. The system of any previous examples, further comprising a coolant system 80.

Example 11. The system of any previous examples, further comprising a humidifier 71.

Example 12. The system of any previous examples, further comprising an intercooler 72.

Example 13. An electric powertrain system comprising a system according to any of the previous examples.

Example 14. The electric powertrain system of example 11 further comprising a battery system.

Example 15. The electric powertrain system of example 11 further comprising a traction electric machine.

Example 16. The electric powertrain system of example 11 further comprising a junction unit 65.

Example 17. The electric powertrain system of example 11 further comprising a DC/DC converter.

Example 18. A vehicle 1 comprising a system 10 according to any one of the previous examples.

Example 19. A computer-implemented method 100 for controlling a system 10 of a vehicle, the system comprising a fuel cell system 12 having at least one fuel cell 40, 40a with an anode side 35 and a cathode side 42, an electrically powered compressor 50 for compressing air and configured to be in fluid communication with an air inlet 42a of the cathode side 42 via a first flow path 44, a flow control valve assembly 20 disposed downstream of the electrically powered compressor 50, the flow control valve assembly 20 being configured to regulate flow of compressed air to the inlet 42a of the cathode side 42 and to a second flow path 48 connectable to an exhaust duct, the second flow path 48 being separate from the first flow path 44, the method comprising determining, by processing circuitry 92 of a controller 90, a change in the operation of the at least one fuel cell 40, 40a, wherein the change amounts to a ramping down of the at least one fuel cell 40, 40a; determining, by processing circuitry 92 of the controller 90, a need for dissipating energy from the system 10 based on data indicative of a need for dissipating energy due to a braking demand of the vehicle; monitoring, by processing circuitry 92 of the controller 90, a hydrogen pressure level at an inlet 36 of the anode side 35; monitoring, by processing of the controller 90, a pressure level of the compressed air in the first flow path 44 and controlling, by processing circuitry 92 of the controller 90, the operation of the electrically powered compressor 50 and the flow control valve assembly 20 based on the determined change in the operation of the at least one fuel cell 40, 40a and the need for dissipating energy, wherein the flow control valve assembly 20 is controlled to distribute the flow of compressed air between the first flow path 44 and the second flow path 48 so as to maintain a pressure balance between the monitored hydrogen pressure level and the monitored pressure level of the compressed air.

Example 20. A computer program product comprising program code for performing, when executed by the processing circuitry 92, the method of any of the previous examples.

Example 21. A non-transitory computer-readable storage medium comprising instructions, which when executed by the processing circuitry 92, cause the processing circuitry 92 to perform the method of any of the previous examples.

The term "fluid communication" as used herein refers to a fluid connection between two components. As such, a component in fluid communication with another component typically means the two are "fluidly connected." This phrase indicates that there is a path or channel between the components that allows fluids (liquids or gases) to move or be transferred from one to the other. The fluid connection can be direct or through a series of conduits, valves, pumps, or other components that facilitate the controlled flow of the fluid.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A system (10) for a vehicle (1), the system comprising a fuel cell system (12) having at least one fuel cell (40, 40a) with an anode side (35) and a cathode side (42), an electrically powered compressor (50) for compressing air and further configured to be in fluid communication with an air inlet (42a) of the cathode side via a first flow path (44), a flow control valve assembly (20) disposed downstream of the electrically powered compressor, the flow control valve assembly being configured to regulate the flow of compressed air to the cathode side and to a second flow path (48) connectable to an exhaust duct (49), the second flow path being separate from the first flow path, wherein the system further comprises a controller (90) having processing circuitry (92) configured to:
- determine a change in the operation of the at least one fuel cell, wherein the change in the operation amounts to a ramping down of the at least one fuel cell;
- determine a need for dissipating energy from the system based on data indicative of a need for dissipating energy due to a braking demand of the vehicle;
- monitor a hydrogen pressure level at an inlet (36) of the anode side;
- monitor a pressure level of the compressed air in the first flow path; and
- control the operation of the electrically powered compressor and the flow control valve assembly based on the determined change in the operation of the at least one fuel cell and the need for dissipating energy, wherein the flow control valve assembly is controlled to distribute the flow of compressed air between the first flow path and the second flow path so as to maintain a pressure balance between the monitored hydrogen pressure level and the monitored pressure level of the compressed air.

2. The system of claim 1, wherein the processing circuitry is further configured to compare the monitored pressure level of the compressed air and the monitored hydrogen pressure level so as to maintain the pressure balance between the monitored hydrogen pressure level and the monitored pressure level of the compressed air.

3. The system of claim 1 or claim 2, wherein the pressure level of the compressed air in the first flow path is monitored by a first pressure sensor (22).

4. The system of any of claim 1-3, wherein the hydrogen pressure level at the inlet of the anode side is monitored by a second pressure sensor (24).

5. The system of any of claims 1-4, wherein the processing circuitry is configured to determine the need for dissipating energy due to the braking demand of the vehicle by determining an amount of possible energy from a regenerative braking event of the vehicle.

6. The system of any of claims 1-5, wherein the processing circuitry is configured to operate the compressor at a higher power level during regenerative braking to consume excess electrical energy.

7. The system of claim 6, wherein the processing circuitry is configured to operate the compressor at the higher power level based on power from any one of an electric machine (62) operating in a generator mode and a battery system (64).

8. The system of any of claims 1-7, wherein the flow control valve assembly comprises a two-way valve configured to have one inlet for receiving compressed air and two outlets for directing the flow of compressed air to the first flow path and the second flow path, respectively.

9. The system of claim 8, wherein the two-way valve is selected from a group consisting of a linear valve, a butterfly valve, and a bleed valve.

10. The system of any of claims 1-9, wherein the electrically powered compressor is an integral part of the fuel cell system.

11. The system of any of claims 1-10, wherein the fuel cell system is an integral part of an electric powertrain system (11).

12. A vehicle comprising the system of any of claims 1-11.

13. A computer-implemented method (100) for controlling a system (10) of a vehicle, the system comprising a fuel cell system (12) having at least one fuel cell (40, 40a) with an anode side (35) and a cathode side (42), an electrically powered compressor (50) for compressing air and further configured to be in fluid communication with an air inlet of the cathode side via a first flow path (44), a flow control valve assembly (20) disposed downstream of the electrically powered compressor, the flow control valve assembly being configured to regulate the flow of compressed air to the cathode side and to a second flow path (48) connectable to an exhaust duct, the second flow path being separate from the first flow path, the method comprising:
- determining, by processing circuitry of a controller, a change in the operation of the at least one fuel cell, wherein the change in operation amounts to a ramping down of the at least one fuel cell;
- determining, by processing circuitry of the controller, a need for dissipating energy from the system based on data indicative of a need for dissipating energy due to a braking demand of the vehicle;
- monitoring, by processing circuitry of the controller, a hydrogen pressure level at an inlet of the anode side;
- monitoring, by processing circuitry of the controller, a pressure level of the compressed air in the first flow path; and
- controlling, by processing circuitry of the controller, the operation of the electrically powered compressor and the flow control valve assembly based on the determined change in the operation of the at least one fuel cell and the need for dissipating energy, wherein the control valve assembly is controlled to distribute the flow of compressed air between the first flow path and the second flow path so as to maintain a pressure balance between the monitored hydrogen pressure level and the monitored pressure level of the compressed air.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 14.
